# EUROPEAN PATENT APPLICATION

(11) **EP 1 624 157 A2**
(43) Date of publication of application: **08.02.2006**
(21) Application number: 05254676.9
(22) Date of filing: 27.07.2005
(51) Int. Cl.: F01D 5/14

(54) **Turbine blade flared buttress**

(30) Priority: 04.08.2004 US 911298
(71) Applicant: UNITED TECHNOLOGIES CORPORATION, Hartford, CT 06101 (US)
(72) Inventor: Cherolis, Anthony, East Hartford Connecticut 06118 (US); Chlus, Wieslaw, East Hartford Connecticut 06108 (US)
(74) Representative: Leckey, David Herbert

(57) **Abstract**

A turbine blade construction having a flared buttress (66) is disclosed. The turbine blade (39) is of the type adapted for use within a gas turbine engine and includes a buttress (66) so as to fortify the area of the blade (39) between the airfoil (42) and the serrated root fillet (48). The bottom of the buttress (66) is flared to reduce the stress concentration due to the abrupt termination of the buttress in close proximity of the mounting root (48). By employing a flared buttress (66), the blade (39) is able to withstand the operating conditions of the turbine within the gas turbine engine over an extended period of time. The turbine blade (39) may also include a mounting root (48) with a compound radiused fillet (78) to further enable the blade to withstand operating stress.

## Description

### Field of the Disclosure

The present disclosure generally relates to gas turbine engines and, more particularly, relates to the construction of the turbine blades used in such engines.

### Background of the Disclosure

Gas turbine engines are well-known devices for generating power and thrust. In an aircraft setting, gas turbine engines are used in both capacities with relatively large gas turbine engines being mounted on the wings or other portions of the aircraft for generating the thrust needed for flight. Gas turbine engines are also used to generate power as evidenced by those gas turbine engines known as auxiliary power units (APUs) typically mounted in a tail end of the aircraft. In land-based applications, gas turbine engines can be used to generate power as well.

With a typical gas turbine engine, they consist primarily of three main sections housed within a casing. In a first section, known as a compressor, a plurality of blades mounted to a central shaft assembly rotate in between a plurality of vanes extending radially inwardly from the casing. The vanes and blades are shaped and angled so as to greatly compress incoming air and do so through a series of stages ultimately introducing extremely compressed hot air to a second section of the engine, known as a combustor. Within the combustor, the compressed hot air is combined with fuel and ignited with the resulting hot gases then being directed rearwardly through the casing to the third section of the engine, known as the turbine section. The turbine section, similar to the compressor section, consists of a plurality of blades extending from the central shaft assembly, and intermeshed with a plurality of vanes extending radially inwardly from the casing. The hot combustion gases cause the turbine blades to rotate at extremely high velocities with the exhaust through the engine thereby creating the thrust needed for flight. Conversely, the rotational energy generated by the operation of the gas turbine engine can be converted to electrical power as by the APU or IGT (land based turbine), wherein the power can be used throughout the cabin for cockpit and meter illumination, air conditioning, cabin lighting, etc. Moreover, as the blades of the turbine section are mounted to the same shaft assembly as the blades of the compressor section, the process is a continual one, wherein the combustion gases cause both the turbine blades and the compressor blades to rotate.

All such engine technology has been used, and continues to be used, with great success. However, improvements are continually being sought in multiple areas. One area is in the construction of the turbine blade themselves. As one of ordinary skill in the art will be able to relate, it is desirable for the blades to be of minimum weight while meeting aerodynamic requirements of the application. The blades are manufactured from materials of a sufficiently robust nature so as to withstand the extremely high temperatures and rotational velocities required of such engines. Moreover, given the unique forces under which such blades must operate, particularly high levels of stress and fatigue due to stress cycles are encountered within the turbine blades, particularly at the junction between the serrated mounting root of the blade, and the airfoil itself. Accordingly, it would be advantageous if an improved design for this junction were to be created.

### Summary of the Disclosure

In accordance with one aspect of the disclosure, a turbine blade is disclosed which comprises a platform, an airfoil, a neck, a blade root, and a flared buttress. The platform includes a flowpath side, an under side, a leading edge, and a trailing edge. The airfoil extends from the platform flowpath side, while the neck extends from the platform under side and the blade root extends from the neck. The buttresses form part of the neck and extends between the platform under side and the blade root. The buttress is a thickened rail between the platform and the blade root located at the leading edge and/or trailing edge of the neck.

In accordance with another aspect of the disclosure, a method of manufacturing a turbine blade is disclosed, which comprises manufacturing a platform having a flowpath side, an under side, a leading edge, and a trailing edge with an airfoil extending from the platform flowpath side, a neck extending from the platform under side, and a blade root extending from the neck; and forming a flared buttress in the neck between the platform under side and the blade root.

In accordance with another aspect of the disclosure, a gas turbine engine is disclosed which comprises a compressor section, a combustor downstream of the compressor section, and a turbine section downstream of the combustor. The turbine section includes a central rotatable shaft from which a plurality of turbine blades extend, with each turbine blade including a platform having a flowpath side, an under side, a leading edge, and a trailing edge. An airfoil extends from the platform flowpath side, a neck extends from the platform under side, a blade root extends from the neck, and buttresses in the neck extend between the platform under side and the blade root.

These and other aspects and features of the disclosure will become more readily apparent upon reading the following detailed description when taken in conjunction with the accompanying drawings.

### Brief Description of the Drawings

Fig. 1 is a sectional view of a gas turbine engine constructed in accordance with the teachings of the disclosure;
Fig. 2 is a plan view of a turbine blade constructed in accordance with the teachings of the disclosure;
Fig. 3 is an enlarged plan view of the turbine blade of Fig. 2;
Fig. 4 is an enlarged plan view of the turbine blade of Fig. 2 with internal passages shown in phantom;
Fig. 5 is a schematic representation of a serrated root fillet constructed in accordance with the teachings of the disclosure;
Fig. 6 is a sectional view of a flared buttress constructed in accordance with the teachings of the disclosure;
Fig. 7 is a plan view of a serrated fillet with stress concentrations represented; and
Fig. 8 is a side view of the fillet of Fig. 7.

While the following disclosure is susceptible to various modifications and alternative constructions, certain illustrative embodiments thereof have been shown in the drawings and will be described below in detail. It should be understood, however, that there is no intention to limit the disclosure to the specific forms disclosed, but on the contrary, the intention is to cover all modifications, alternative constructions, and equivalents falling within the scope of the disclosure as defined by the appended-claims.

### Detailed Description of the Disclosure

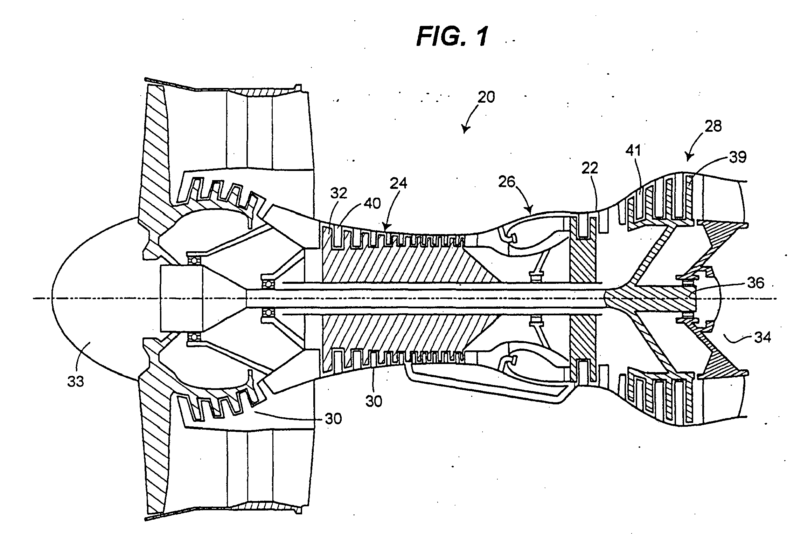

Referring now to the drawings, and with specific reference to Fig. 1, a gas turbine engine constructed in accordance with the teachings of the disclosure is generally referred to by reference numeral 20. While the teachings of the disclosure can be used in conjunction with various types and designs of gas turbine engines, the engine 20 is depicted in a generic sense to depict one embodiment wherein the turbine blades of the present disclosure can be effectively employed.

As shown therein, the engine 20 includes an outer housing or fan casing 22 within which reside a compressor section 24, a combustor section 26 downstream of the compressor section 24, and a turbine section 28 downstream of the combustor section 26. As one of ordinary skill in the art will be able to readily attest, the compressor section 24 is able to greatly compress incoming air through a series of stages 30 and introduce highly compressed air to the combustor section 26. Within the combustor section 26, fuel is introduced and combusted whereupon the extremely hot resulting combustion gases are directed through the turbine section 28 causing blades 32 therein to rotate at extremely high velocities. Air enters the engine 20 at a nozzle 33 and exits the engine 20 at an outlet 34 at extremely high velocities, thus providing the power or thrust desirable for the given application of the engine 20.

More specifically, the engine 20 includes a central rotor or shaft assembly 36 extending and interconnecting the compressor section 24 and turbine section 28. A plurality of the blades 32 extend from the compressor section 24 and a plurality of blades 39 extend from the turbine section 28, both in a radially outward fashion. Moreover, the blades 32, 39 are intermeshed with a plurality of vanes 40, 41 extending radially inwardly from the compressor section 24 and the turbine section 28, respectively. It is the orientation and proximity of the blades 32 and vanes 40 which cause the air to be compressed within the compressor section 24 and the orientation and proximity of the blades 39 and vanes 40 that cause the turbine section 28 to generate the desired thrust. Moreover, as the blades 32, 39 are interconnected by the shaft assembly 36, the process is perpetual and interconnected in that the hot combustion gases cause the turbine blades 39 to rotate, in turn causing the compressor blades 32 to rotate thereby drawing in further air for compression and combustion.

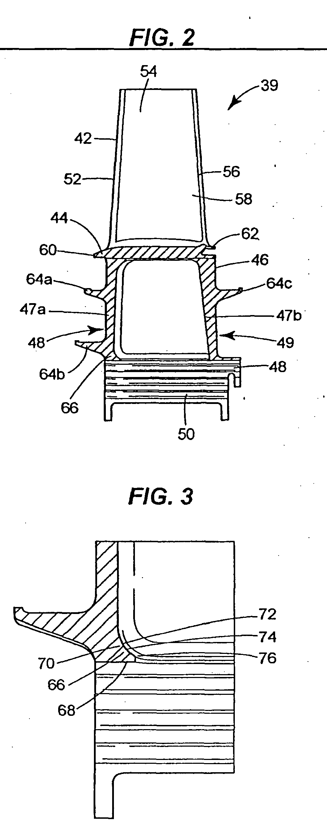

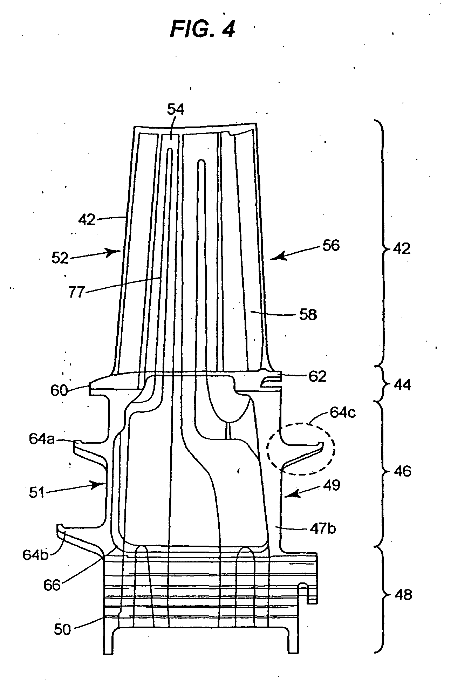

Referring now to Figs. 2 and 4, one of the turbine blades 39 is shown in further detail. The blade 39 may include an airfoil 42 extending from a platform 44, itself extending from a neck 46, itself extending from a mounting root 48. As one of ordinary skill in the art will readily understand, the mounting root 48 includes a plurality of serrations 50 adapted to slidably interfit with openings (not shown) provided in the shaft assembly 36 of the engine 20 so as to secure the blades 39 thereto, and be able to withstand the extremely high centrifugal forces encountered when the blades 39 rotate at operating speed.

The airfoil 42 can be provided in a variety of different shapes, orientations, concavities, and convexities, so as to optimize the operation of the engine. From Fig. 2, it will be noted that the airfoil 42 includes a leading edge 52, a concave interior 54, a trailing edge 56, and an outer skin 58. The airfoil 42 of Figs. 2 and 4 is shown from the concave, or pressure side.

Referring now to the platform 44, it is shown to be perpendicular to the airfoil 42 and also include a leading edge 60 and a trailing edge 62. Extending from the platform 44 in a direction opposite to the airfoil 42 is the neck 46. The neck 46 includes buttress rails 47a and 47b at leading edge 51 and trailing edge 49, respectively. As will be described in further detail herein, the buttress rails 47a and 47b are provided to enhance the structural strength and rigidity of the blade 39. Buttress rails also provide blade to blade sealing capability. A plurality of protrusions 64, known as angel wings, extend outwardly from the buttress rails 47a and 47b with a first wing 64a extending in the leading edge direction proximate the platform 44, a second wing 64b extending in the same direction, but proximate the mounting root 48, and a third wing 64c extending in the trailing edge direction in alignment with the first wing 64a. The wings 64 form a continuous ring with other blades 39 (not shown), which combine with a matching ring (not shown) formed by the adjacent non-rotating vanes 41 to form a loose seal to meter cooling air flowing radially outward along the leading edge 51 and trailing edge 49.

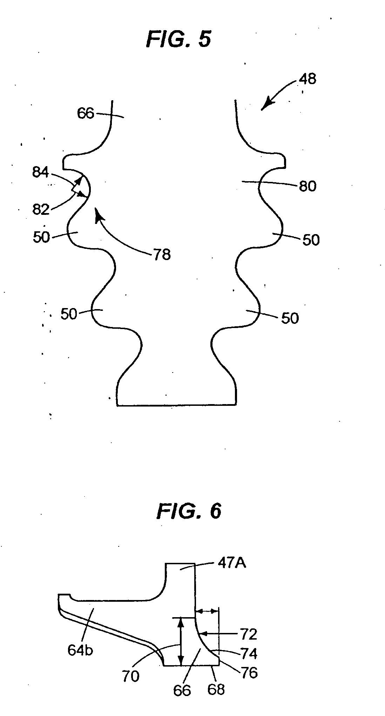

Referring now to Figs. 3 and 6, a buttress rail with a flared bottom 66 of the neck 46 is shown in more detail. As shown therein, wherein the neck 46 is substantially linear in construction and extends parallel to the air foil 42, it will noted that the flared buttress 66 is provided in a lower-most portion of the neck 46 proximate the mounting root 48. The flared buttress 66 forms a substantially triangularly shaped reinforcement region for connection of the neck 46 to the mounting root 48, to spread out the local stress concentration due to the stiff buttress rail, and to increase the serviceable life of the blade 39. In other embodiments, shapes other than triangular ones can be employed for the flared buttress including, but not limited to, rectangular shapes, linear strips, and angled supports. The flared buttress illustrated may be provided a pressure side of the airfoil.

With specific reference to Fig. 6, the flared buttress 66 is shown to include a lower edge 68, a phantom side edge 70, and a hypotenuse 72. The hypotenuse 72 may be substantially arcuate in shape and include a curvilinear section 74 terminating in a lower lip 76. While the flared buttress 66 can be manufactured of a variety of different dimensions, the applicants have found that a ratio of the lower edge 68 or lateral dimension to the phantom side edge or longitudinal dimension 70 of seventy-five percent to be particularly advantageous.

With regard to the material from which the blade 39 is made, it is to be understood that any of a variety of high temperature capability, strong materials be employed, with directionally solidified, cast nickel superalloy being one example. Also, the blade 39 includes a plurality of cooling passages 77. By providing the cooling passages 77 through the blade 39, cooling air is able to enter the blade 39 at the bottom of the root 48, travel through the neck 46, follow a serpentine path through the airfoil 42, and exit from cooling holes at the leading edge 51. In so doing, the blade 39 is kept at a sufficiently low temperature to ensure proper operation.

Another feature of the present disclosure which reduces the overall stress of the blade 39, and thus improves its serviceable life, is the dimension or shape under which the filleted or serrated mounting root 48 is constructed. Referring now to Fig. 5, the mounting root 48 is shown to include a compound radiused fillet 78 at an upper region 80 proximate the flared buttress 66. Similar to the flared buttress 66, the compound radiused fillet 78 is provided proximate the leading edge of the blade 39. Apcordingly, the substantial forces encountered by the leading edge of the blade 39 when the engine 20 is in operation, can be better withstood owing to the reduced concentrated stress due to the combination of the flared buttress and compound fillet.

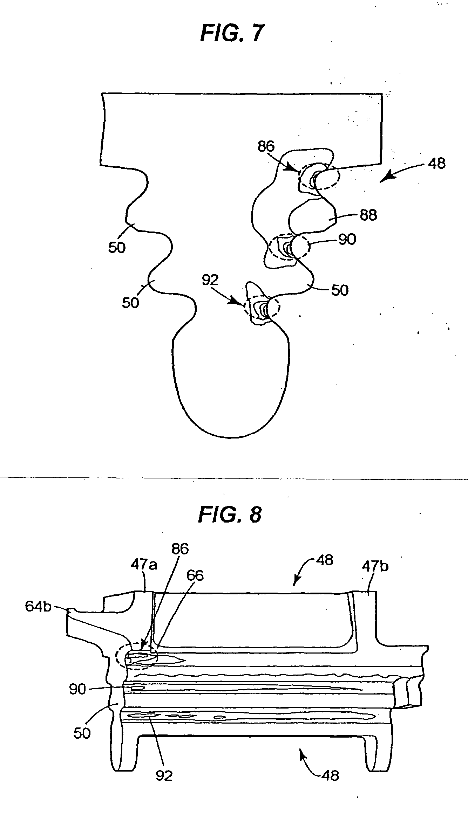

While a number of different dimensions can be used to form the compound radiused fillet 78, Figs. 5, 7, and 8 depicts one particularly advantageous embodiment wherein a first radius 82 relative to a second radius 84 is approximately five to six, or in other words, 87.5 percent of the other. This is in opposition to conventional fillets which only provide for a uniformly radiused serrated mounting root 48. Moreover, as shown in Figs. 7 and 8, a concentration of stress 86 is found at the leading edge pressure side of the root 48 under the buttress rail 47a and above the top serration 88. By increasing the radius locally at location 86, the stress due to the curvature is reduced, thus increasing the life of the blade 39. Stress at locations 90 and 92 are reduced as well.

From the foregoing, one of ordinary skill in the art will readily understand that the teachings of the disclosure can be used to construct a turbine blade having an improved and extendible serviceable life in that the blade is better able to withstand the substantial operating forces the blade is subjected to during operation of the engine. More specifically, by providing a flared buttress and compound radiused fillet at a leading edge of the blade, the ability of the blade to withstand those forces is improved, the tendency of the blade to fatigue or break proximate the joint between the air foil and mounting root is reduced, and thus the serviceable life of the engine is increased.

## Claims

1. A turbine blade (39) comprising:
a platform (44) having a first or flowpath side, second or under side, a leading edge (52), and a trailing edge (56);
an airfoil (42) extending from the platform first or flow path side;
a neck (46) extending from the platform second or under side;
a blade root (48) extending from the neck (46); and
a flared buttress (66) forming a part of the neck (46) and extending between the platform (44) second side and the blade root (48).

2. A turbine blade of claim 1, wherein the flared buttress (66) is proximate the leading edge (52) of the platform (44).

3. The turbine blade of claim 1 or 2, wherein the airfoil (42) includes a pressure side and a suction side, and wherein the flared buttress (66) is proximate the airfoil pressure side.

4. The turbine blade of any preceding claim, wherein the flared buttress (66) is triangular in shape.

5. The turbine blade of claim 4, wherein the flared buttress (66) includes a longitudinal dimension (70) and a lateral dimension (68), the longitudinal dimension (70) being greater than the lateral dimension (68).

6. The turbine blade of claim 5, wherein the lateral dimension (68) is approximately seventy-five percent of the longitudinal dimension (70).

7. The turbine blade of any preceding claim, wherein the blade root (48) includes a plurality of serrations (50).

8. The turbine blade of claim 7, wherein at least one of the plurality of serrations (50) includes a compound fillet radius (78).

9. The turbine blade of claim 8, wherein the serration (50) with the compound fillet radius (78) is proximate the leading edge (52) of the platform (44).

10. The turbine blade of claim 8, wherein the radius comprising the compound radius fillet (78) has first and second radii (82,84) having a ratio of approximately five to six.

11. A method of manufacturing a turbine blade (39), comprising:
manufacturing a platform (44) having a flowpath side, an under side, a leading edge (52), and a trailing edge (56), with an airfoil (42) extending from the platform flowpath side, a neck (46) extending from the platform under side, and a blade root (48) extending from the neck (46); and
forming a flared buttress (66) in the neck (46) between the platform under side and the blade root (48).

12. The method of claim 11 further including the steps of providing the blade with the features of any of claims 2 to 10.

13. A gas turbine engine (20), comprising:
a compressor section (24);
a combustor (26) downstream of the compressor section (24); and
a turbine section (28) downstream of the combustor (26), the turbine having a central rotatable shaft (36) from which a plurality of turbine blades (39) extend, each turbine blade being a blade as claimed in any of claims 1 to 10.
